# EUROPÄISCHE PATENTSCHRIFT

(11) **EP 1 652 315 B1**
(45) Veröffentlichungstag und Bekanntmachung des Hinweises auf die Patenterteilung: **27.01.2010**
(21) Anmeldenummer: 04741327.3
(22) Anmeldetag: 29.07.2004
(51) Int. Cl.: H04B 5/00, G06K 7/00, G06K 19/07

(54) **KOMMUNIKATIONSVORRICHTUNG ZUM AUFBAU EINER DATENVERBINDUNG ZWISCHEN INTELLIGENTEN GERÄTEN**
COMMUNICATION DEVICE FOR ESTABLISHING A DATA CONNECTION BETWEEN INTELLIGENT APPLIANCES
DISPOSITIF DE COMMUNICATION POUR L'ETABLISSEMENT D'UNE LIAISON DE DONNEES ENTRE DES APPAREILS INTELLIGENTS

(30) Priorität: 30.07.2003 DE 10334765
(43) Veröffentlichungstag der Anmeldung: 03.05.2006
(73) Patentinhaber: Giesecke & Devrient GmbH, 81677 München (DE)
(72) Erfinder: FINKENZELLER, Klaus, 85774 Unterföhring (DE)
(74) Vertreter: Klunker . Schmitt-Nilson . Hirsch
(86) Internationale Anmeldenummer: PCT/EP2004/008537
(87) Internationale Veröffentlichungsnummer: WO 2005/013506

(56) Entgegenhaltungen:
- EP-A- 0 696 011
- EP-A- 1 024 451
- DE-A- 3 412 610
- DE-A- 10 206 676
- DE-C- 19 855 207

## Beschreibung

Die Erfindung betrifft die Nutzung von selbsttätig eine Datenverbindung einrichtenden Kommunikationselementen in zur Durchführung einer Datenübertragung eingerichteten, intelligenten Geräten, wobei die Datenverbindungseinrichtung durch Annäherung zweier intelligenter Gerät ausgelöst wird. Ein Konzept für die selbsttätige Einrichtung einer Datenverbindung zwischen intelligenten Geräten ist aus der Spezifikation ECMA/TC32/TG19/2003/12 unter der Bezeichnung "Near Field Communication" (NFC) bekannt. Zweck des Konzeptes ist es, die Einrichtung einer Datenverbindung zwischen intelligenten Geräten so einfach wie möglich zu machen. Das Konzept sieht hierzu vor, daß zwei intelligente Geräte, die beide zur Durchführung eines NFC-Protokolles eingerichtet sind, bei gegenseitiger Annäherung auf eine Distanz von typischerweise weniger als 0,2 Metern automatisch eine Datenverbindung aufbauen. In einem Suchmodus sendet dabei eines der intelligenten Geräte, der Initiator, eine Suchanfrage, die von dem zweiten intelligenten Gerät, dem Target, beantwortet wird. In einem unmittelbar folgenden Datenaustausch verständigen sich die beiden intelligenten Geräte auf einen Datenübertragungsmodus, gemäß dem anschließend ein Datenaustausch zwischen den Datenverarbeitungskomponenten der beteiligten intelligenten Geräte erfolgt.

Das Erkennen, ob sich ein anderes intelligentes Gerät im Ansprechbereich des NFC-Protokolles befindet, erfolgt im Suchmodus durch zyklisches Aussenden von Suchanfragen. Als Parameter für die Suchanfragen sind eine Sendefrequenz von 13,56 MHz und eine magnetische Feldstärke von mindestens 1,5 A/m bis maximal 7,5 A/m vorgesehen. Die vorgesehene Mindestfeldstärke bedingt in zur Durchführung eines NFC-Protokolles bereiten intelligenten Geräten eine relativ große ständige Leistungsaufnahme. Für Geräte mit beschränkten Energieressourcen, besonders für batteriebetriebene Geräte hat das eine Verringerung der möglichen Betriebsdauer zufolge. Um diesen unerwünschten Effekt zu verkleinern kann vorgesehen sein, die intelligenten Geräte mit einer von dem Nutzer zu betätigenden Schalteinrichtung zu versehen, mittels derer der Suchmodus einer NFC-Einheit aktiviert wird. Diese Möglichkeit hebt allerdings das durch das NFC-Konzept angestrebte Ziel einer besonders einfachen Bedienbarkeit zumindest zum Teil wieder auf, da zumindest die Schaltfunktion gesondert betätigt werden muß.

In den Standards ISO/IEC 14443 und ISO/IEC 15693 wird ein Verfahren beschrieben, in welchem ein Lesegerät versucht mit einem anderen intelligenten Gerät (kontaktlose Chipkarte/RFID-Transponder) eine Datenverbindung herzustellen. Hierzu sendet das Lesegerät ein Suchsignal - REQUEST - periodisch mit hoher Feldstärke (z. B. 1,5 - 7,5 A/m gemäß ISO/IEC 14443) aus, solange bis ein intelligentes Gerät in den Ansprechbereich des Lesegerätes gelangt.

Aus der deutschen Patentanmeldung DE 102 06 676 ist eine mit einen Transponder betätigbare Schaltvorrichtung bekannt, die, solange ein Schaltvorgang nicht ausgelöst wird, nahezu leistungslos betrieben werden kann. Das zu schaltende Gerät verfügt hierzu über eine Spule, die Teil eines Schwingkreises ist, der im Erkennungsbetrieb als im wesentlichen unbelasteter reiner Schwingkreis betrieben wird. Die im Schwingkreis stehende Resonanzfrequenz wird dabei von einem Frequenzbeobachter überwacht. Wird ein Transponder mit einer Transponderspule an die Erkennungsspule angenähert, ändert sich die Resonanzfrequenz des Schwingkreises. Dies wird von dem Frequenzbeobachter erkannt, der daraufhin ein Schaltsignal erzeugt, welches das zu schaltende Gerät einschaltet. Die vorgeschlagene Lösung konzentriert sich auf den direkten Wechsel vom Erkennungsmodus in den Datenübertragungsmodus, d.h. auf das direkte, einstufige Einschalten eines intelligenten Gerätes mittels eines Spulenträgers, der vor allem als Schaltelement dient.

EP 0 696 011 A2 offenbart eine Vorrichtung und ein Verfahren zum Identifizieren einer Vielzahl von Transpondern, die sich innerhalb eines Abfragefeldes einer Abfrageeinheit befinden. Jedem Transponder wird ein eigener Identifikationscode zugewiesen und die Abfrageeinheit erstellt und modifiziert dynamisch einen Bitstring, der benutzt wird, um Reaktionen von ausgewählten Transpondern anzufordern, bis jeder Transponder in dem Abfragefeld identifiziert ist. Der Bitstring wird zu den Transpondern übertragen, welche diesen mit den niederwertigsten Bits ihrer jeweiligen Identifikationscodes vergleichen. Eine Abweichung zwischen dem Identifikationscode und dem Bitstring führt zu einer Unterdrückung der Reaktion des Transponders.

DE 198 55 207 C1 offenbart einen berührungslos ansprechbaren Schalter zur Aktivierung eines batteriebetriebenen berührungslos arbeitenden Identifiktionssystems, das über einen fest angeordneten Sender, eine Elektronik zur Auswertung von Codeinformation und über mobile Codeträger mit Transponder verfügt. Im aktivierten Zustand baut der Sender ein elektromagnetisches Feld auf, welches dem Transponder eines angenäherten Codeträgers die notwendige Betriebsenergie liefert und durch Rückwirkung des Transponders moduliert wird und dadurch die Codeinformation des Transponders erhält. Ein Permanentmagnet mit zugeordneter Spule ist in der Nähe des Senders angeordnet. Die Codeträger mit integriertem Transponder tragen zusätzlich ein ferromagnetisches Teil. Bei Annäherung des Codeträgers an den Permanentmagneten wird in dessen Spule eine Spannung induziert, die - verstärkt durch einen Operationsverstärker - ein Signal zur Aktivierung des Senders liefert. Der Sender wird wieder deaktiviert, sobald die Codeinformation des Transponders nicht länger benötigt wird. Der Sender wird somit nur kurzzeitig aktiviert und benötigt im Ruhezustand keinen Strom. Diese stromsparende Auslegung ermöglicht es, das Identifikationssystem ohne Netzanschluß zu betreiben.

Aufgabe der Erfindung ist es, eine Kommunikationsvorrichtung für zum automatischen Datenverbindungsaufbau eingerichtete, intelligente Geräte anzugeben, die ohne Einschränkung der Nutzungsfreundlichkeit einen möglichst geringen Energieverbrauch aufweiset.

Diese Aufgabe wird gelöst durch eine Vorrichtung mit den Merkmalen des Hauptanspruchs. Die erfindungsgemäße Kommunikationsvorrichtung verfügt über ein Kommunikationselement mit einer Spule zur Abgabe von Suchsignalen, wobei der Suchsignalbetrieb jedoch erst aufgenommen wird, wenn zuvor mittels einer Meßeinrichtung eine Eigenschaftsänderung in einem mittels derselben Spule eingerichteten Übertragungsschwingkreis erkannt wurde. Da Übertragungsschwingkreis und Meßeinrichtung sich nahezu leistungslos betreiben lassen, muß die Ausgabe von Suchsignalen zum Erkennen der Anwesenheit korrespondierender intelligenter Geräte nur erfolgen, wenn sich möglicherweise ein weiteres intelligentes Gerät im Ansprechbereich der Spule befindet. Der Energiebedarf der Kommunikationsvorrichtung läßt sich dadurch erheblich reduzieren. Die erfindungsgemäße Lösung eignet sich daher insbesondere auch für intelligente Geräte mit beschränkten Energieressourcen, etwa für batteriebetriebene Geräte. Besonders vorteilhaft ist, daß die Handhabung eines mit einer erfindungsgemäßen Kommunikationsvorrichtung ausgestatteten intelligenten Gerätes genauso erfolgen kann, als ob das Gerät dauerhaft Suchanfragen aussendete. Besondere Handlungen durch einen Nutzer sind nicht erforderlich. Vorteilhaft muß zur Nutzung einer erfindungsgemäßen Kommunikationsvorrichtung auch in die Durchführung des Datenverbindungsaufbaus nach Erkennung eines weiteren anwesenden intelligenten Gerätes nicht eingegriffen werden.

In vorteilhafter Weiterbildung ist vorgesehen, daß für die Durchführung einer Datenübertragung nach Einschalten des Kommunikationselementes ein ohmscher Widerstand in den Schwingkreis geschaltet wird, um damit bei Verringerung der Güte die Bandbreite des Übertragungsschwingkreises zu erhöhen.

In einer weiteren vorteilhaften Weiterbildung der Kommunikationsvorrichtung ist vorgesehen, den Schwingkreis nach Einschalten des Kommunikationselementes durch Zuschalten geeigneter Bauelemente so zu beeinflussen, daß sich die Resonanzfrequenz ändert. Dadurch wird zusätzlich sichergestellt, daß andere intelligente Geräte, die auf gleiche Weise zum automatischen Datenverbindungsaufbau eingerichtet sind, durch einen Suchbetrieb nicht gestört werden.

In einer weiteren vorteilhaften Ausgestaltung der erfindungsgemäßen, Kommunikationsvorrichtung ist vorgesehen, daß die Meßeinrichtung nur periodisch in Betrieb gesetzt wird. Der Energieverbrauch der Kommunikationsvorrichtung läßt sich dadurch weiter verringern. Zur Realisierung des periodischen Inbetriebsetzens besitzt die Kommunikationsvorrichtung zweckmäßig eine Zeitsteuerung und erfolgt die Bewertung eines Meßergebnisses durch Vergleich mit einem aus vorgehenden Messungen gewonnenen Durchschnittswert.

Die Meßeinrichtung weist vorzugsweise zwei Oszillatoreinrichtungen zur Erzeugung von Schwingungssignalen auf, von denen eine mit der Spule gekoppelt ist. Weiterhin kann die Meßeinrichtung Schaltungskomponenten zur Erzeugung des Steuersignales für die Schaltvorrichtung auf Basis einer Phasenbeziehung zwischen diesen Schwingungssignalen oder daraus abgeleiteten Signalen aufweisen. Dadurch läßt sich mit vergleichsweise geringem Aufwand eine sehr präzise Überwachung des Übertragungsschwingkreises erreichen und auf diese Weise die Anwesenheit eines weiteren Geräts im Ansprechbereich der Spule zuverlässig feststellen.

Unter Bezugnahme auf die Zeichnung wird nachfolgend ein Ausführungsbeispiel der Erfindung näher erläutert.

Es zeigen:
- Fig. 1: Aufbau und Anordnung von zum automatischen Datenverbindungsaufbau eingerichteten intelligenten Geräten,
- Fig. 2: ein vereinfachtes Ersatzschaltbild einer Kommunikationsvorrichtung,
- Fig. 3: ein Flußdiagramm des Betriebes einer Kommunikationsvorrichtung,
- Fig. 4: ein Flußdiagramm des Betriebes einer mit einer Zeitsteuerung versehenen Kommunikationsvorrichtung,
- Fig. 5: ein erstes Ausführungsbeispiel für eine schaltungstechnische Realisierung der Meßeinheit mittels einer PLL-Schaltung,
- Fig. 6: mehrere Signalverläufe innerhalb der Meßeinheit bei Annäherung eines anderen Geräts,
- Fig. 7: ein zweites Ausführungsbeispiel für eine schaltungstechnische Realisierung der Meßeinheit mittels einer PLL-Schaltung und
- Fig. 8: eine schaltungstechnische Realisierung der Funktionsböcke Spannungsdifferentiator und Schwellwertschalter aus den Fig. 5 oder 7.

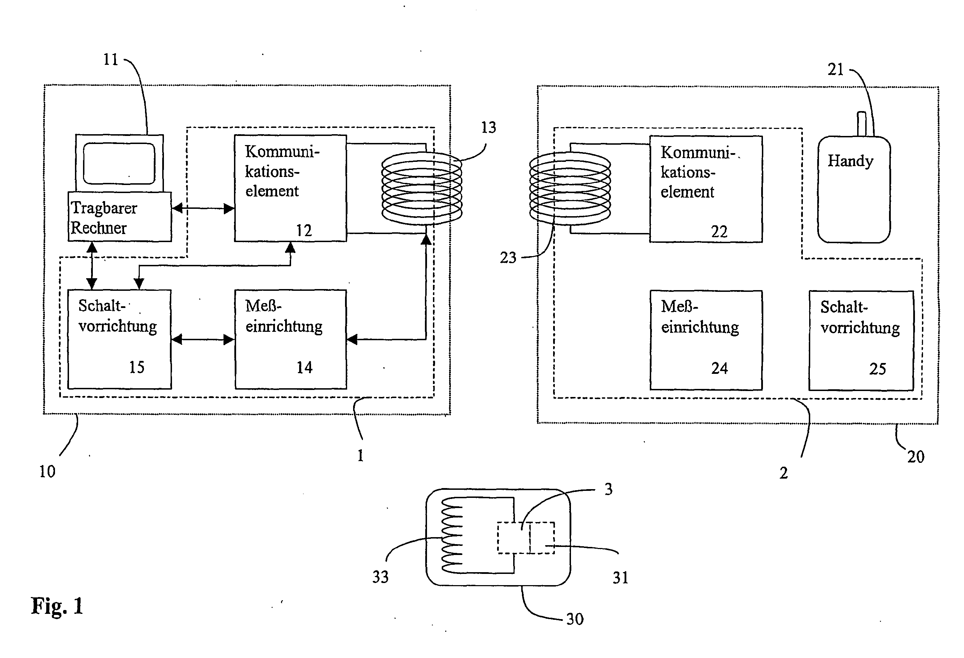

Fig.1 zeigt intelligente Geräte 10, 20, 30 in unterschiedlichen Ausgestaltungen. Alle sind dazu eingerichtet, über eine Spule 13, 23, 33 einen Datenaustausch mit einem der anderen intelligenten Geräte 10, 20, 30 zu führen. Alle im folgenden einfach als Gerät bezeichneten intelligenten Geräte 10, 20, 30 sind grundsätzlich gleichartig aufgebaut und bestehen aus einer Datenverarbeitungskomponente 11, 21, 31 und einer Kommunikationsvorrichtung 1, 2,3.

Die Datenverarbeitungskomponente 11, 21, 31 bewirkt wesentlich die Intelligenz der Geräte 10, 20, 30 und beinhaltet eine zentrale Prozessoreinheit zur Ausführung von Datenverarbeitungsoperationen. Die Datenverarbeitungskomponente 11, 21, 31 bestimmt zudem maßgeblich die äußere Gestalt der Geräte 10, 20, 30. Wie in Fig.1 angedeutet, kann das Gerät 10, 20, 30 z. B. die Gestalt eines tragbaren Rechners 11 oder eines Handys 21 besitzen oder in einem, etwa in einer kontaktlosen Chipkarte 30 ausgebildeten RFID-Transponder mit einem Chip 31 realisiert sein. Die Aufzählung möglicher Gestaltungsformen ist dabei nicht abschließend. Neben den dargestellten kann das Gerät 10, 20 ,30 ebenso z. B. in einem Gebrauchsgegenstand, etwa einer Armbanduhr, oder einem mit elektronischen Komponenten versehenen Kleidungsstück, etwa einer Jacke, realisiert sein, aber auch ein fest installiertes Lesegerät in einem Ticketing- oder Zutrittsystem darstellen.

Die Kommunikationsvorrichtung 1, 2, 3 beinhaltet jeweils ein Kommunikationselement 12, 22, eine mit dem Kommunikationselement 12, 22 verbundene Spule 13, 23, 33, eine mit der Spule 13, 23, 33 verbundene Meßeinrichtung 14, 24 sowie eine Schaltvorrichtung 15, 25, welche mit der Datenverarbeitungskomponente 11, 21, dem Kommunikationselement 12, 22 und der Meßeinrichtung 14, 24 verbunden ist. In praktischer Realisierung ist die Kommunikationsvorrichtung 1, 2, 3 in der Regel baulich als Einheit mit der Datenverarbeitungskomponente 11, 21 ausgebildet und befindet sich also z.B. im Gehäuse eines tragbaren Rechners 11, eines Handys 21 oder ist im in Chip 31 einer Chipkarte 30 integriert.

Funktion des Kommunikationselementes 12, 22 ist, die Anwesenheit eines anderen Gerätes 10, 20, 30 im Ansprechbereich der Spule 13, 23, 33 festzustellen. Das Kommunikationselement 12, 22 besitzt Mittel zur Ausführung von Softwareprogrammroutinen und kann als selbständige Baugruppe ausgebildet sein. Wurde ein anderes Gerät 10, 20, 30 erkannt, richtet das Kommunikationselement 12, 22 ferner selbsttätig eine Datenverbindung zu diesem ein und stellt den Datenübertragungsmodus für einen nachfolgenden Datenaustausch zwischen den jeweiligen datenverarbeitenden Komponenten 11, 21, 31 her. In einer besonders zweckmäßigen Ausgestaltung ist das Kommunikationselement 12, 22 dazu eingerichtet, ein NFC-Protokoll, wie es in der genannten Veröffentlichung ECMA/TC32-TG19/2003/12 beschrieben ist oder ein kontaktloses Übertragungsprotokoll wie es z. B. in den Normen ISO/IEC 14443, ISO/IEC 15699 und ISO/IEC 18000-3 beschrieben ist, durchzuführen.

Die Spule 13, 23, 33 ist von üblicher Bauart und dient in an sich bekannter Weise zur Durchführung eines berührungslosen Datenaustausches mit einem korrespondierenden Gerät 10, 20, 30. In der Regel ist sie, wie in der Ausführung als Chipkarte 30 angedeutet, integrierter Bestandteil des Gerätes 10, 20, 30. Innerhalb der Kommunikationsvorrichtung 1, 2, 3 ist die Spule 13, 23, 33 Teil eines Übertragungsschwingkreises 50 mit einer definierten, charakteristischen Resonanzfrequenz, die vom Betriebszustand des Gerätes 10, 20, 30 abhängen kann.

Die Meßeinrichtung 14, 24 ist mit der Spule 13, 23, 33 verbunden und erfaßt eine Eigenschaft des mit der Spule 13, 23, 33 gebildeten Übertragungsschwingkreises 50. Sie kann insbesondere von dem Typ sein, wie er in der genannten deutschen Patentanmeldung DE 102 06 676 beschrieben ist.

Die Schaltvorrichtung 15, 25 dient zum Ein- und Ausschalten des Kommunikationselementes 12, 22 und der Meßeinrichtung 14, 24. Das Ein- und Ausschalten einer oder beider Komponenten 12, 22 bzw. 14, 24 kann dabei indirekt über die Datenverarbeitungskomponente 11, 21 erfolgen. Die Schaltvorrichtung 15, 25 dient weiter dazu, einzelne Elemente der Meßeinrichtung 14, 24 zu- und abzuschalten. Desweiteren können mittels der Schaltvorrichtung 15, 25 andere, nicht dargestellte Komponenten eines Gerätes 10, 20, 30 geschaltet werden.

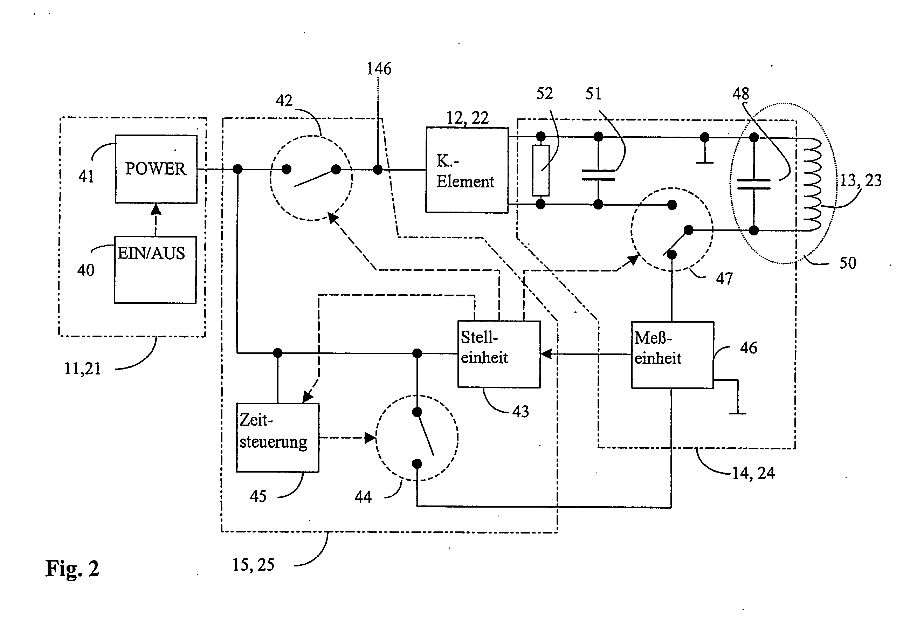

Fig. 2 zeigt ein vereinfachtes Ersatzschaltbild eines Gerätes 10, 20, 30. Die Datenverarbeitungskomponente 11, 22, mithin die äußere Erscheinungsform des Gerätes 10, 20 wird darin durch einen von einem Benutzer betätigbaren Ein-/ Ausschalter 40 repräsentiert, mittels dessen die Hauptenergieversorgung 41 des Gerätes 10, 20 ein- und ausschaltbar ist. Die Hauptenergieversorgung 41 kann insbesondere eine Batterie oder ein Akkumulator sein. Insbesondere ein fest installiertes Lesegerät kann aber auch auf eine Netzspannung als Hauptenergieversorgung 41 zurückgreifen. Das Vorhandensein des Schalters 40 richtet sich dabei nach der Gestalt des Gerätes; in bestimmten Ausführungsvarianten, etwa bei Ausführung als Chipkarte 30, kann der Schalter 40 entfallen. Das Gerät 30 ist dann entweder ständig eingeschaltet oder wird durch einen gleichwirkenden, an die Bauform angepaßten Mechanismus eingeschaltet.

Die.Schaltvorrichtung 15, 25 beinhaltet zwei Schalter 42, 44, die mittels einer Stelleinheit 43 ansteuerbar sind, sowie ggfs. eine Zeitsteuerung 45. Stelleinheit 43 und Zeitsteuerung 45 sind mit der Hauptenergieversorgung 41 verbunden. Der erste Schalter 42 ist zwischen der Hauptenergieversorgung 41 und dem Kommunikationselement 12, 22 plaziert, der zweite Schalter 44 zwischen Hauptenergieversorgung 41 und Meßeinrichtung 14,25. Der zweite Schalter 44 wird über die Zeitsteuerung 45 betätigt, die hierzu mit der Stelleinheit 43 verbunden ist und von dieser ein Schaltsignal erhält. Durch den ersten Schalter 42 können, wie durch die Verbindung 146 angedeutet, neben dem Kommunikationselement 12, 22 weitere, nicht dargestellte Komponenten des jeweiligen Gerätes 10, 20, 30 ein- und ausgeschaltet werden. Alle Bauelemente der Schaltvorrichtung 15, 25 können diskret, als Schaltungen oder auch in Form von Softwareprogrammen realisiert sein. Stelleinheit 43 und Zeitsteuerung 45 besitzen zweckmäßig zudem eine gewisse Intelligenz und sind zur Ausführung von Softwareprogrammroutinen eingerichtet.

Wesentliches Element der Meßeinrichtung 14, 24 ist eine Meßeinheit 46, die mittels des Schalters 44 der Schaltvorrichtung 15, 25 ein- und ausschaltbar ist. Die Meßeinheit 46 ist weiter mit der Stelleinheit 43 der Schaltvorrichtung 15, 25 sowie über einen Schalter 47 mit der Spule 13, 23 verbunden. Der Schalter 47 wird von der Stelleinheit 43 betätigt. Er verbindet dabei die Spule 13, 23 entweder mit der Meßeinheit 46 oder mit dem Kommunikationselement 12, 22. Die Spule 13, 23 ist desweiteren mit dem Kommunikationselement 12, 22 verbunden. Wie die Schaltvorrichtung 15, 25 können die Bauelemente der Meßeinrichtung 14, 24 diskret, als Schaltungen oder in Form von Softwareprogrammen realisiert sein. Die Meßeinheit 46 ist zweckmäßig ebenfalls mit einer gewissen Intelligenz ausgestattet und zur Ausführung von Softwareprogrammroutinen eingerichtet. In hinsichtlich der Energieressourcen besonders beschränkten Ausführungen des Gerätes, etwa bei Ausführung in der Form einer Chipkarte 30, kann die Meßeinrichtung entfallen. Das Gerät 30 kann dann von anderen Geräten 10, 20 erkannt werden, nicht aber selbst andere Geräte 10, 20, 30 erkennen.

Parallel zur Spule 13, 23 ist eine Kapazität 48 angeordnet, die zusammen mit der Spule 13, 23 einen Übertragungsschwingkreis 50 bildet. Der Übertragungsschwingkreis 50 ist über den Schalter 47 an das Kommunikationselement 12 oder die Meßeinheit 46 anschaltbar. Parallel zu dem Übertragungsschwingkreis 50, in Bezug auf den Übertragungsschwingkreis 50 jedoch hinter dem Schalter 47, kann eine weitere Kapazität 51 sowie ein Widerstand 52 angeordnet sein. Beide Elemente 51, 52 können über den Schalter 47 in den Übertragungsschwingkreis 50 geschaltet werden. Die Kapazität 51 bewirkt dabei eine Änderung der Resonanzfrequenz des Übertragungsschwingkreises 50, der Widerstand 52 eine Erhöhung der Bandbreite bei gleichzeitiger Verringerung der Schwingkreisgüte. Die erwähnten passiven Bauelemente 47, 49, 51, 52 können als diskrete Bauelemente aber auch in Gestalt von Baugruppen mit entsprechender Außenwirkung ausgeführt sein.

In einer besonders für Geräte 10, 20 mit hinreichend großen Energieressourcen geeigneten, vorteilhaften Variante ist die Meßeinheit 46 als Frequenzwobbler ausgebildet, der die Meßfrequenz kontinuierlich über eine vorbestimmten Frequenzbereich streichen läßt. Der vorbestimmte Frequenzbereich umfaßt zumindest eine Frequenz, auf die ein anderes Gerät 10, 20, 30 abgestimmt ist.

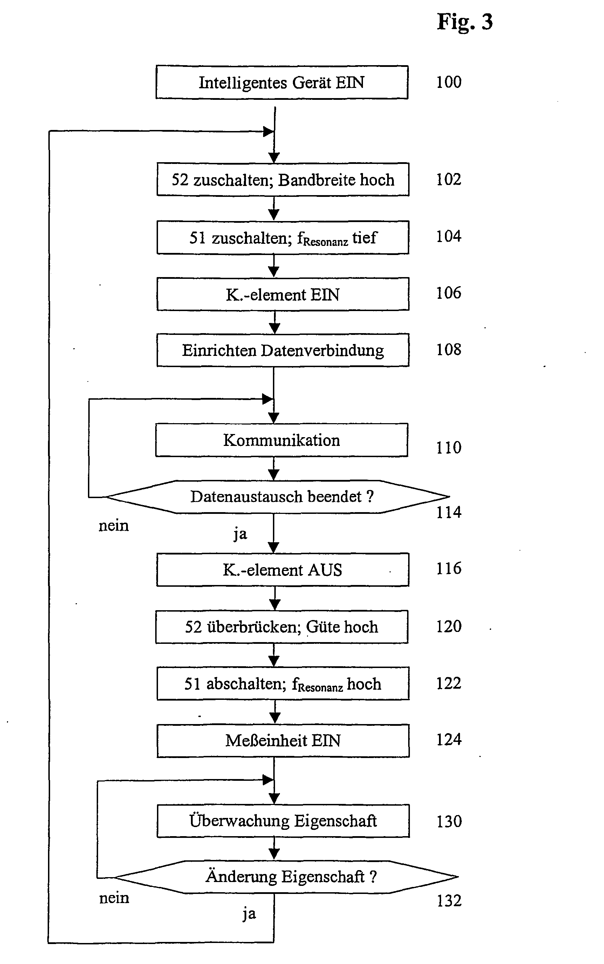

Fig. 3 veranschaulicht eine erste mögliche Betriebsart eines Gerätes 10, 20,30. Entsprechend dem in Fig. 2 wiedergegebenen Ersatzschaltbild verfügt es ggfs. über eine Kapazität 51 sowie einen Widerstand 52, um den Übertragungsschwingkreis 50 zu beeinflussen.

Der Betrieb setzt ein, indem das Gerät 10, 20, 30 eingeschaltet wird, Schritt 100, etwa mittels eines Schalters 40, welcher die Hauptenergieversorgung 41 betätigt. Durch das Einschalten wird auch die Stelleinheit 43 eingeschaltet. Diese stellt darauf den Schalter 47 so ein, daß die Spule 13, 23, 33 über den Schalter 47 mit dem Kommunikationselement 12, 22 verbunden ist. Zugleich werden durch die Einstellung des Schalters 47 der Widerstand 52, Schritt 102, und falls vorhanden, die Kapazität 51 in den Übertragungsschwingkreis 50 geschaltet, Schritt 104.

Das Zuschalten des Widerstandes 52 hat eine Verschlechterung der Güte Q des Übertragungsschwingkreises 50 zur Folge, bewirkt aber, da für den Zusammenhang zwischen Güte Q und Bandbreite B gilt: B ≈1/Q, zugleich eine Erhöhung der für eine Datenübertragung zur Verfügung stehenden Bandbreite B in dem Übertragungsschwingkreis 50.

Durch die Zuschaltung der Kapazität 51 verringert sich die Resonanzfrequenz des Übertragungsschwingkreises 50 und wird auf eine für eine Datenübertragung geeignete Übertragungsfrequenz, z.B. 13,56 MHz, eingestellt. Durch die Umstellung werden die nachfolgende Datenübertragung und der Betrieb der Kommunikationsvorrichtung 1, 2, 3 unempfindlich gegen Störungen durch magnetische Felder von in der Nachbarschaft befindlichen, gleichartigen Geräten 10, 20, 30, die im Erkennungsmodus, d.h. bei einer höheren Resonanzfrequenz arbeiten.

Desweiteren schaltet die Stelleinheit 43 das Kommunikationselement 12, 22 ein, Schritt 106. Das Kommunikationselement 12, 22 geht dadurch in den Suchmodus über und sendet über die Spule 13, 23, 33 zyklisch ein Suchsignal aus, um von einem gegebenenfalls im Ansprechbereich der Spule 13, 23, 33 befindlichen anderen Gerät 10, 20, 30 eine Antwort zu erhalten.

Befindet sich ein anderes Gerät 10, 20, 30 im Ansprechbereich der Spule 13, 23, 33, reagiert es auf das Suchsignal durch Rücksenden einer Antwort, auf die hin das Kommunikationselement 12, 22 die Kommunikationsvorrichtung 1, 2, 3 in den Datenübertragungsmodus bringt. Hierzu baut es unter Verwendung eines geeigneten Protokolles, etwa der zuvor erwähnten Protokolle (NFC,14443, ...), eine Datenverbindung zu der Datenverarbeitungskomponente 11, 21, 31 des antwortenden Gerätes 10, 20, 30 auf, Schritt 108.

Nach Einrichtung der Datenverbindung führt die Datenverarbeitungskomponente 11, 21, 31 mit der korrespondierenden Datenverarbeitungskomponente 11, 21, 31 des anwesenden Gerätes 10, 20, 30 über die Spule 13, 23, 33 in bekannter Weise einen Datenaustausch durch, Schritt 110.

Die Stelleinheit 43 wartet, bis der Datenaustausch zwischen den Datenverarbeitungskomponenten 11, 21, 31 der beteiligten Geräte 10, 20, 30 abgeschlossen ist, Schritt 114. Die Feststellung, daß der Datenaustausch beendet ist, kann durch Erhalt eines entsprechenden Signales von der Datenverarbeitungskomponente 11 oder dem Kommunikationselement 12 oder auch durch zyklische Ausführung eines Kontrollschrittes in der Stelleinheit 43 selbst erfolgen. Das Kommunikationslement 12,22 kann unabhängig von dem Schalter 42 mit der Zeitsteuerung 45 und der Stelleinheit 43 verbunden sein.

Ist der Datenaustausch beendet, bringt die Stelleinheit 42 die Kommunikationseinrichtung 1, 2, 3 in den Erkennungsmodus.

Hierzu trennt die Stelleinheit 43 durch Verstellen des Schalters 42 das Kommunikationselement 12, 22 von der Hauptenergieversorgung 41, Schritt 116.

Weiter betätigt die Stelleinheit 43 den Schalter 47 und verbindet die Meßeinheit 46 mit dem Übertragungsschwingkreis 50. Durch die Schalterbetätigung werden ferner der Widerstand 52 und ggf. die Kapazität 51 wieder aus dem Übertragungsschwingkreis 50 geschaltet, Schritt 120, 122. Das Entfernen des Widerstandes 52 bewirkt, daß sich in dem Übertragungsschwingkreis 50 eine Leerlaufgüte Q₀ einstellt, die im Idealfall nur durch die Induktivität der Spule 13, 23, 33, die Schwingkreiskapazität 48 sowie den Eingangswiderstand der Spule 13, 23, 33 bestimmt wird. Entsprechend der verbesserten Güte Q₀ vergrößert sich der Erkennungsbereich, in dem im Erkennungsmodus andere anwesende Geräte 10, 20, 30 erkannt werden.

Durch das mögliche Ausschalten einer Kapazität 51 kann die Frequenz des Schwingkreises 50, und damit die Meßfrequenz der Meßeinheit 46 ggf. erhöht und z. B. in dem Bereich 13,56 bis 17 MHz eingestellt werden. Dies hat zur Folge, daß die Meßeinheit 46 von anderen, in der näheren Umgebung befindlichen und im Kommunikationsmodus (d.h. Sendebetrieb) befindlichen intelligenten Geräten, nicht oder nicht so stark beeinflußt wird. Da Signale anderer Lesegeräte ansonsten als Annähern eines intelligenten Gerätes mißverstanden werden könnten, ist die erzielte Verringerung der Detektion von Signalen anderer Lesegeräte vorteilhaft. Ebenso werden somit beim Betrieb im Erkennungsmodus gegebenenfalls in der Nähe befindliche andere Geräte 10, 20, 30, die sich im Datenübertragungsmodus befinden, nicht gestört.

Weiter schaltet die Stelleinheit 43 zur Herstellung des Erkennungsmodus die Meßeinheit 46 durch Betätigen des Schalters 44 ein, Schritt 124.

Die Meßeinheit 46 überwacht anschließend eine Eigenschaft des Übertragungsschwingkreises 50. Beispielsweise überwacht sie die in dem Übertragungsschwingkreis 50 stehende Frequenz, während dieser in Resonanz betrieben wird. Wird.in diesem Zustand die Spule 13, 23, 33 eines anderen Gerätes 10, 20, 30 in den Erkennungsbereich der Spule 13, 23, 33 gebracht, bewirkt dies eine Änderung der Resonanzfrequenz im Übertragungsschwingkreis 50, welche von der Meßeinheit 46 erkannt wird, Schritt 132. Alternativ wäre auch eine Auswertung/Messung der Impedanz des in Resonanz betriebenen Übertragungsschgwingkreises 50 möglich.

Hat die Meßeinheit 46 eine Änderung in der beobachteten Schwingkreiseigenschaft erkannt, übermittelt sie der Stelleinheit 43 ein entsprechendes Steuersignal, woraufhin die Stelleinheit 43 wieder die Schritte 102 ff. ausführt und den Such- bzw. den Datenübertragungsmodus einleitet.

Erlaubt die Meßeinrichtung 46 ein Wobbeln der Schwingkreisfrequenz, erfolgt die Überwachung der Schwingkreiseigenschaft über den gesamten überstrichenen Frequenzbereich. Der überstrichene Frequenzbereich enthält zumindest die Resonanzfrequenz einer Art von Geräten, zu der eine Datenverbindung aufgebaut werden kann. Liegt die Resonanzfrequenz eines solchen Gerätes 30 etwa bei 13,56 MHz, kann der Wobbelbereich beispielsweise zwischen 13 und 18 MHz liegen. Tritt bei einer beliebigen Frequenz innerhalb des überstrichenen Frequenzbereiches eine Änderung der Schwingkreiseigenschaft auf, übermittelt die Meßeinheit 46 der Stelleinheit 43 ein Steuersignal zur Ausführung der Schritte 102 ff.

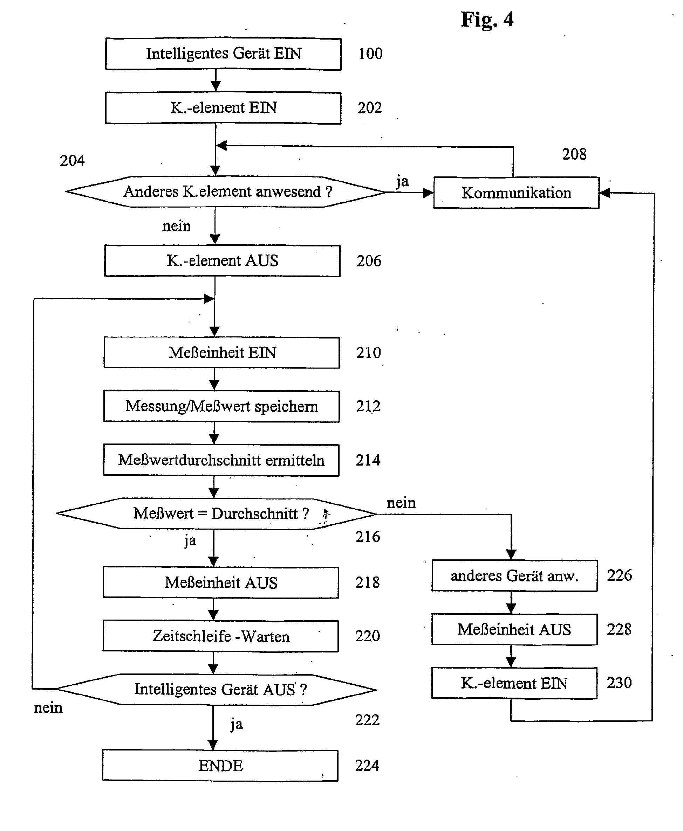

Fig. 4 zeigt eine Variante zum Betrieb einer gemäß Fig. 2 aufgebauten Kommunikationsvorrichtung. Die Betriebsvariante kann alternativ oder auch ergänzend zu der in Fig. 3 veranschaulichten Betriebsweise eingerichtet werden. Vorausgesetzt für die in Fig. 4 gezeigte Betriebsvariante ist, daß das Gerät 10, 20, 30 über eine Zeitsteuerung 45 verfügt, wie sie in Fig. 2 angedeutet ist.

Der Betrieb setzt wiederum ein, indem das Gerät 10, 20 eingeschaltet wird, Schritt 100, etwa durch Einschalten der Hauptenergieversorgung 41 mittels eines Schalters 40.

Die Kommunikationsvorrichtung 1, 2, 3 geht daraufhin zunächst in den Suchmodus. Hierzu schaltet die Stelleinheit 43 das Kommunikationselement 12, 22 ein; Schritt 202, das nachfolgend durch zyklisches Absetzen von Suchsignalen prüft, ob sich ein anderes Gerät 10, 20, 30 im Ansprechbereich der Spule 13, 23,33 befindet, Schritt 204.

Geht auf das Absetzen des Suchsignals in Schritt 204 eine Antwort von einem anderen anwesenden Gerät 10, 20, 30 ein, wechselt die Kommunikationsvorrichtung 1, 2, 3 nach Einrichtung einer Datenverbindung zu dem anderen Gerät 10, 20, 30 in den Datenübertragungsmodus und führt einen Datenaustausch mit dem erkannten Gerät 10, 20, 30 durch, Schritt 208.

Geht auf das Suchsignal keine Antwort ein, schaltet die Stelleinheit 43 das Kommunikationselement 12, 22 wieder aus, Schritt 206.

Weiter aktiviert die Stelleinheit43 die Zeitsteuerung 45, die daraufhin die Meßeinheit 46 im Rahmen zyklischen Ein- und Ausschaltbetriebes für eine vorbestimmte Zeit durch entsprechendes Ansteuern des Schalters 44 einschaltet, Schritt 210. Die Meßeinheit 46 führt darauf eine Messung der überwachten Schwingkreiseigenschaft durch und speichert den Meßwert, Schritt 212. Aus allen bis dahin ermittelten und gespeicherten Meßwerten bildet sie nachfolgend einen Meßwertdurchschnitt, Schritt 214.

Mit dem ermittelten Meßwertdurchschnitt vergleicht sie den in Schritt 212 gewonnenen Meßwert, Schritt 216. Entspricht der Meßwert dem Durchschnitt, so befindet sich kein anderes Gerät 10, 20, 30 im Erkennungsbereich des Übertragungsschwingkreises 50. Die Meßeinheit 46 führt dann keine weitere Funktion aus und wird durch Einwirkung der Zeitsteuerung 45 ausgeschaltet, Schritt 218. Die Meßeinheit 46 bleibt danach ausgeschaltet, während die Zeitsteuerung 45 den Ablauf einer vorbestimmten Ausschaltzeit abwartet, Schritt 220. Die Ausschaltzeit ist zweckmäßig größer gewählt als die Einschaltzeit, in der die Meßeinheit 46 die Messung ausführt.

Während der Wartezeit kann das Gerät 10, 20 als Ganzes, etwa durch Betätigen des Schalters 40, ausgeschaltet werden, Schritt 222. Tritt dieser Fall ein, endet der Betriebsablauf, Schritt 224.

Läuft die vorbestimmte Ausschaltzeit ab, ohne daß das Gerät insgesamt ausgeschaltet wurde, schaltet die Zeitsteuerung 45 durch Betätigen des Schalters 44 die Meßeinheit 46 erneut ein und wiederholt die Schritte 210 ff..

Ergibt sich bei der Prüfung in Schritt 216, daß ein gefundener Meßwert nicht dem ermittelten Meßwertdurchschnitt entspricht, so befindet sich ein anderes Gerät 10, 20, 30 im Erkennungsbereich des Schwingkreises 50, Schritt 226. Die Meßeinheit 46 übermittelt der Stelleinheit 43 dann ein entsprechendes Steuersignal, auf das hin die Stelleinheit 43 die Kommunikationsvorrichtung 1, 2, 3 in den Suchmodus bringt. Sie schaltet hierzu durch Betätigen des Schalters 44 die Meßeinheit 46 aus, Schritt 228, und das Kommunikationselement 12, 22 durch Betätigen des Schalters 42 ein, Schritt 230.

Das Kommunikationselement 12, 22 stellt anschließend wie beschrieben den Datenübertragungsmodus her, in welchem dann der Datenaustausch zwischen den Datenverarbeitungskomponenten 11, 21 der beteiligten Geräte erfolgt, Schritt 208.

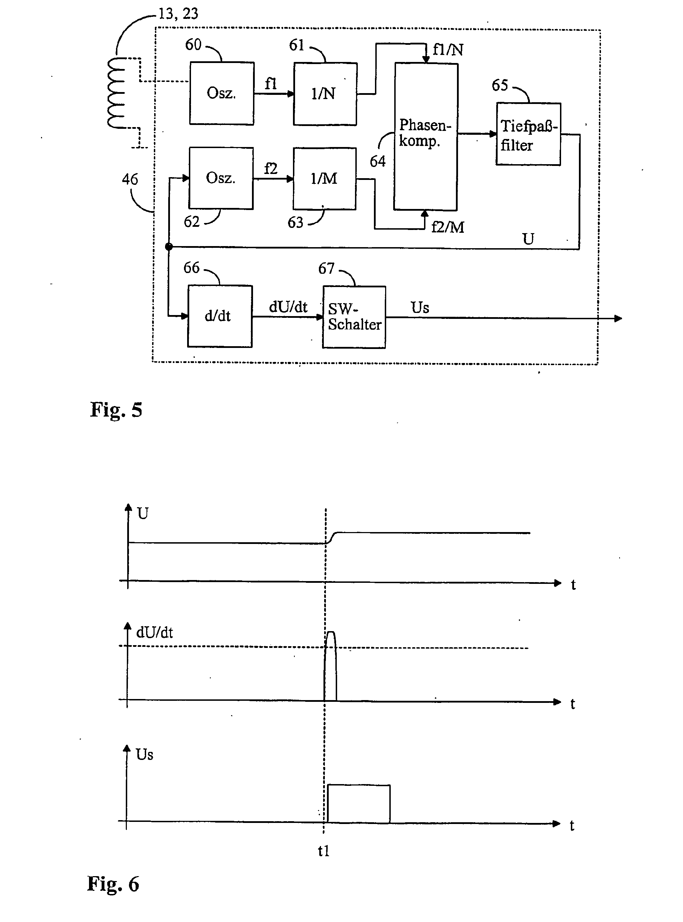

Fig. 5 zeigt ein erstes Ausführungsbeispiel für eine schaltungstechnische Realisierung der Meßeinheit 46 mittels einer PLL-Schaltung. PLL steht für Phase Locked Loop und bedeutet, daß ein Signal mit einer Frequenz relativ zu einem Signal mit einer Bezugsfrequenz so genau eingestellt wird, daß die Phasenbeziehung zwischen den Signalen permanent erhalten bleibt. Das erste Ausführungsbeispiel der Meßeinheit 46 weist einen ersten Oszillator 60 auf, der ein Signal mit einer Frequenz f1 erzeugt und in einen ersten Frequenzteiler 61 einspeist, der als ein ganzzahliger oder binärer Teiler ausgebildet sein kann und eine Frequenzteilung mit einem Teilungsfaktor N vornimmt. Durch gestrichelte Linien ist angedeutet, daß an den ersten Oszillator 60 die Spule 13, 23 angeschlossen ist. Der Anschluß kann in der in Fig. 2 dargestellten Weise über den Schalter 47 und eine gemeinsame Masse erfolgen. Die genaue Ausführung hängt von der schaltungstechnischen Ausgestaltung der verwendeten Oszillatorschaltung, sowie der schaltungstechnischen Ausgestaltung des Kommunikationselements 12,22 (Senderendstufe) ab. So sind Oszillatorschaltungen bekannt, z. B. Collpits, bei denen ein Anschluß der Spule 13,23 (wechselspannungsseitig) an Masse gelegt werden kann. In diesem Falle kann der Schalter 47 so ausgeführt werden, daß lediglich ein Anschluß der Spule auf die Meßeinheit 46 umgeschaltet werden muß, wie es beispielsweise in Fig. 2 dargestellt ist.

Bei einer anderen Ausgestaltung der Oszillatorschaltung 60 kann es auch erforderlich sein, daß ein zweiter Anschluß der Spule nicht mit der Masse, sondern mit der Versorgungsspannung verbunden wird (z. B. Schaltungsvariante Collpits). In diesem Falle kann ein zweiter Schalter 47b (nicht abgebildet) nötig sein.

Ebenso sind Oszillatorschaltungen bekannt, bei denen beide Anschlüsse der Spule mit der Oszillatorschaltung 60 verbunden sein müssen. Auch in diesem Falle ist ein zusätzlicher Schalter 47b (nicht abgebildet) zur Umschaltung der Spule 13, 23 zwischen der Meßeinheit 46 und dem Kommunikationselement 12,22 nötig.

Der in Fig. 2 ebenfalls dargestellte Anschluß der Meßeinheit 46 an den Schalter 44, über den die Meßeinheit 46 ein- und ausgeschaltet werden kann, ist in Fig. 5 nicht eingezeichnet, da die Energieversorgung der einzelnen Komponenten der Meßeinheit 46 aus Gründen der Übersichtlichkeit in Fig. 5 nicht dargestellt ist.

Die Meßeinheit 46 weist weiterhin einen zweiten Oszillator 62 auf, der ein Signal mit einer Frequenz f2 in einen zweiten Frequenzteiler 63 einspeist, der eine Frequenzteilung mit einem Teilungsfaktor M vornimmt. Der zweite Frequenzteiler 63 ist entsprechend dem ersten Frequenzteiler 61 ausgebildet und ausgangsseitig mit einem Eingang eines Phasenkomparators 64 verbunden. An einen weiteren Eingang des Phasenkomparators 64 ist der erste Frequenzteiler 61 mit seinem Ausgang angeschlossen. Dem Phasenkomparator 64 ist ein Tiefpaßfilter 65 nachgeschaltet, der eine Spannung U sowohl in einen Eingang des zweiten Oszillators 62 als auch in einen Eingang eines Spannungsdifferentiators 66 einspeist. Der Spannungsdifferentiator 66 ist ausgangsseitig mit einem Eingang eines Schwellwertschalters 67 verbunden, der an seinem Ausgang eine Schaltspannung Us für die in Fig. 2 dargestellte Stelleinheit 43 bereitstellt. Durch die Komponenten 60, 61, 62, 63, 64 und 65 der Meßeinheit 46 wird eine abgewandelte PLL-Schaltung ausgebildet, deren Funktionsweise im Zusammenhang mit den weiteren Komponenten 66 und 67 im folgenden näher erläutert wird.

Der erste Oszillator 60 ist als LC-Oszillator ausgebildet, wobei die Spule 13, 23 als frequenzbestimmende Induktivität L herangezogen wird. Durch geeignete Dimensionierung einer frequenzbestimmenden Kapazität C wird der erste Oszillator 60 so abgeglichen, daß er bei Abwesenheit eines anderen Geräts 10, 20, 30 auf der im Erkennungsmodus verwendeten Sendefrequenz zum Schwingen kommt. Optional kann der Kondensator 51 eingesetzt werden, um eine höhere Frequenz zu verwenden. Durch den ersten Frequenzteiler 61 wird die Frequenz f1 des vom ersten Oszillator 60 erzeugten Signales unter Verwendung des Teilungsfaktors N geteilt und dadurch ein Signal mit einer Frequenz f1/N erzeugt. Da die Frequenzteilung zwar vorteilhaft, aber nicht zwingend erforderlich ist, kann der erste Frequenzteiler 61 auch entfallen bzw. einen Teilungsfaktor N =1 aufweisen.

Der zweite Oszillator 62 ist als ein spannungsgesteuerter Oszillator ausgebildet, so daß die Frequenz f2 des vom zweiten Oszillator 62 erzeugten Signales von der eingespeisten Spannung U abhängt. Das Signal mit der Frequenz f2 wird vom zweiten Frequenzteiler 63 in ein Signal mit einer Frequenz f2/M umgewandelt. Analog zum ersten Frequenzteiler 61 kann auch der zweite Frequenzteiler 63 entfallen bzw. einen Teilungsfaktor M = 1 aufweisen. Die von den Frequenzteilern 61 und 63 ausgegebenen Signale werden dem Phasenkomparator 64 zugeführt, der sie miteinander vergleicht und ein von der Phasenverschiebung abhängiges Signal an den Tiefpaßfilter 65 ausgibt. Der Tiefpaßfilter 65 unterdrückt die hochfrequenten Signalanteile, so daß sich die vom Tiefpaßfilter 65 ausgegebene Spannung U als Steuerspannung für den zweiten Oszillator 62 eignet. Durch die Regeleigenschaften der PLL-Schaltung wird die Frequenz f2 des zweiten Oszillators 62 automatisch so eingestellt, daß sich ein Wert f2 = f1 * M/N ergibt und beide Oszillatoren 60 und 62 phasenstarr gekoppelt sind.

In einer vorteilhaften Ausgestaltung werden für den ersten Frequenzteiler 61 ein Teilungsfaktor N > 1 und für den zweiten Frequenzteiler 63 ein Teilungsfaktor M = 1 vorgesehen. Dies führt dazu, daß der zweite Oszillator 62 bei einer niedrigeren Frequenz als der erste Oszillator 60 betrieben wird und so den Betrieb des Gerätes 10, 20, 30 nicht durch sein Eigensignal stören kann. Beispielsweise kann der zweite Oszillator 62 für N = 2 bei einer Frequenz f2 von 6,78 MHz betrieben werden. Besonders günstig ist es auch, wenn die Teilungsfaktoren N und M der Frequenzteiler 61 und 63 in einem nicht ganzzahligen Verhältnis zueinander stehen, z. B. M/N = 5/6. Dadurch kann die Frequenz f2 des zweiten Oszillators 62 so gewählt werden, daß auch durch eventuelle Oberwellen der zweiten Frequenz f2 sowie einer parasitären Einstrahlung des zweiten Oszillators 62 in die Spule 13, 23 gleichfrequente Störungen, die sich besonders negativ auswirken, nicht zu befürchten sind. Dabei ist es unerheblich, ob das Verhältnis M/N kleiner oder größer eins gewählt wird.

Befindet sich die Meßeinheit 46 im eingeregelten Zustand, d. h. besteht zwischen den Signalen der beiden Frequenzteiler 61 und 63 eine phasenstarre Übereinstimmung, so stellt sich für die vom Tiefpaßfilter 65 ausgegebene Spannung U ein konstanter Wert ein. Nähert sich der Spule 13, 23 ein anderes Gerät 10, 20, 30, so führt der Einfluß der induktiv eingekoppelten Impedanz des anderen Geräts 10, 20, 30 zu einer Veränderung der Phase und ggf. der Frequenz des ersten Oszillators 60 und damit zu einer Phasenverschiebung zwischen den beiden Eingangssignalen des Phasenkomparators 64. Dies führt zu einer Änderung der vom Tiefpaßfilter 65 ausgegebenen Spannung U und damit zu einer Änderung der Frequenz f2 und der Phase des vom zweiten Oszillator 62 erzeugten Signales bis die von den beiden Oszillatoren 60 und 62 erzeugten Signale wieder phasenstarr gekoppelt sind. Die auf diese Weise durchgeführte Nachregelung der Frequenz f2 des zweiten Oszillators 62 und die daran geknüpfte Erkennung der Anwesenheit eines anderen Geräts 10, 20 30 werden anhand von Fig. 6 näher erläutert.

Fig. 6 zeigt mehrere Signalverläufe innerhalb der Meßeinheit 46 bei Annäherung eines anderen Geräts 10, 20, 30. Bei allen Signalverläufen ist auf der Abszisse jeweils die Zeit t mit gleicher Skalierung aufgetragen, so daß ein direkter Vergleich der Signalverläufe möglich ist. Im oberen Diagramm der Fig. 6 ist der zeitliche Verlauf der vom Tiefpaßfilter 65 ausgegebene Spannung U dargestellt, d. h. auf der Ordinate ist die Spannung U aufgetragen. Im mittleren Diagramm ist auf der Ordinate die zeitliche Änderung der Spannung dU/ dt aufgetragen, die vom Spannungsdifferentiator 66 ermittelt und an den Schwellwertschalter 67 ausgegeben wird. Im unteren Diagramm ist auf der Ordinate die vom Schwellwertschalter 67 erzeugte Schaltspannung Us aufgetragen.

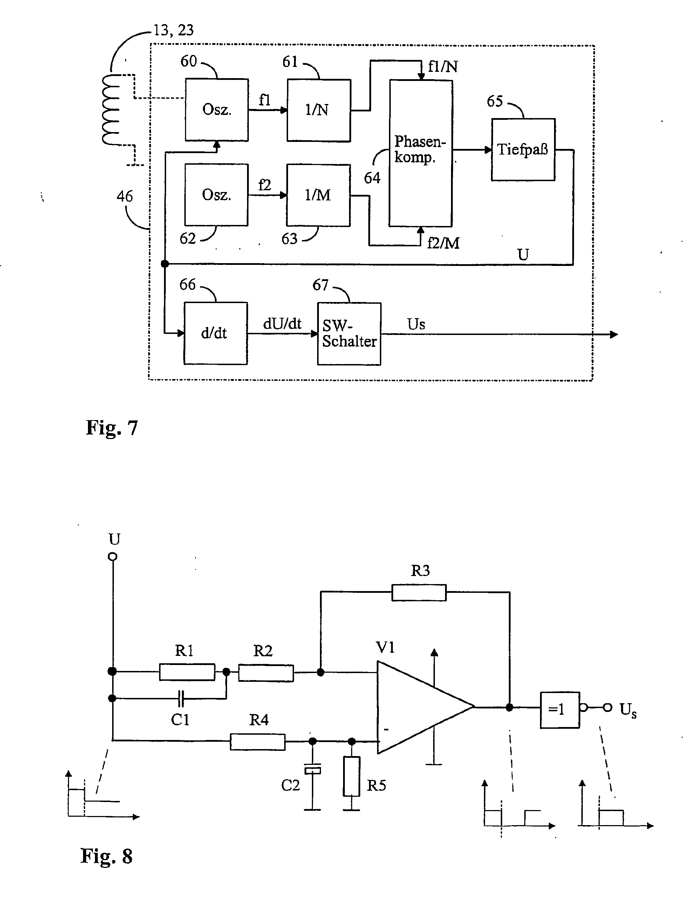

Eine Möglichkeit zur Ausgestaltung der Funtionsblöcke 66, 67 ist in der Fig. 8 dargestellt.

Hierbei wird durch R4, R5, C2 ein Tiefpassfilter gebildet, wobei sich ein Mittelwert einer Teilspannung von U mit einer großen Zeitkonstante (z.B.1 s) am (-)-Eingang eines Verstärkers V1 einstellt. Ebenso stellt sich über R1, R2, R3 eine Teilspannung von U am (+)-Eingang des Verstärkers V1 ein.

Sinkt z. B. die Spannung U beim Annähern einer Spule 13, 23, 33 rasch ab, so fällt die Spannung am (+)-Eingang kurzzeitig unter die Spannung am (-)-Eingang und erzeugt so ein Schaltsignal U_{S}, solange bis sich die Spannung am (-)-Eingang auf den neuen (Mittel-)Wert eingestellt hat.

Die Spannung U kann bei Annäherung einer Spule 13, 23, 33 ansteigen oder auch abfallen. Das genaue Verhalten hängt von der verwendeten Schaltung (Fig. 5, Fig. 7) und deren praktischer Ausführung ab.

Die Annäherung eines anderen Geräts ab der Zeit t = t1 hat die bereits erwähnte Änderung der bis dahin konstanten Spannung U des Tiefpaßfilters 65 zur Folge. Dies äußert sich im oberen Diagramm der Fig. 6 in einem sprunghaften Anstieg der Spannung U, die danach auf einem höheren Niveau verharrt. Da der Wert, um den sich die Spannung U ändert, relativ klein sein kann, wird für die Ansteuerung des Schwellwertschalters 67 nicht die Spannung U selbst, sondern deren zeitliche Änderung dU / dt herangezogen. Wie aus dem mittleren Diagramm hervorgeht, weist die zeitliche Änderung der Spannung dU / dt unmittelbar nach der Zeit t = t1 ein stark ausgeprägtes Maximum auf, das gut für eine weitere Verarbeitung geeignet ist. Dieses Maximum überschreitet die Ansprechschwelle des Schwellwertschalters 67, die durch eine gestrichelte horizontale Linie dargestellt ist. Dies hat zur Folge, daß der Schwellwertschalter 67 anspricht und den im unteren Diagramm dargestellten Rechteckimpuls erzeugt. Infolge der endlichen Steigung, mit der die Spannung U ansteigt und der vom Schwellwertschalter 67 benötigten Zeit für die Signalverarbeitung, beginnt der Rechteckimpuls der Schaltspannung Us mit einer geringfügigen zeitlichen Verzögerung nach der Zeit t = t1. Der Rechteckimpuls wird von der Meßeinheit 46 zur Weiterverarbeitung an die Stelleinheit 43 ausgegeben.

Fig. 7 zeigt ein zweites Ausführungsbeispiel für eine schaltungstechnische Realisierung der Meßeinheit 46 mittels einer PLL-Schaltung. Der Aufbau entspricht weitgehend dem ersten Ausführungsbeispiel. Allerdings ist der zweite Oszillator 62 im Gegensatz zum ersten Ausführungsbeispiel der Meßeinheit 46 nicht als ein spannungsgesteuerter Oszillator sondern als ein frequenzstabiler Quarzoszillator ausgeführt. Der erste Oszillator 60 ist nunmehr als ein spannungsgesteuerter LC-Oszillator ausgeführt. Die Einstellung der Frequenz f1 erfolgt dabei über eine spannungsabhängige Kapazität, welche zusammen mit der Induktivität der Spule 13, 23 die Frequenz f1 des ersten Oszillators 60 bestimmt. Bedingt durch die andersartige Ausbildung der Oszillatoren 60 und 62 ist die Verschaltung der einzelnen Komponenten der Meßeinheit 46 dahingehend geändert, daß der Ausgang des Tiefpaßfilters 65 mit einem Eingang des ersten Oszillators 60 verbunden ist. Der zweite Oszillator 62 erhält kein Eingangssignal. Aus dem geänderten Aufbau ergibt sich für das zweite Ausführungsbeispiel der Meßeinheit folgende Funktionsweise:

Durch einen analogen Regelmechanismus, wie für das erste Ausführungsbeispiel beschrieben, wird die Frequenz f1 des ersten Oszillators 60 auf einen konstanten Wert geregelt, der durch die Frequenz f2 des zweiten Oszillators 62 und die Teilungsfaktoren N und M der Frequenzteiler 61 und 63 festgelegt wird. Dabei ist es durch eine entsprechende Wahl der Frequenz f2 und der Teilungsfaktoren N und M insbesondere möglich, den ersten Oszillator 60 konstant bei einer Frequenz f1 zu betreiben, die der im Erkennungsmodus verwendeten Sendefrequenz entspricht. Bei einer Annäherung eines anderen Geräts 10, 20, 30 ändert sich die Frequenz f1 des ersten Oszillators 60 trotz der induktiv eingekoppelten Impedanz nicht. Gleichwohl kommt es bei einer Annäherung eines anderen Geräts 10, 20, 30 zu einer detektierbaren Änderung der Spannung U, da der erste Oszillator 60 mit Hilfe der Spannung U nachgeregelt wird und dadurch die Verstimmung des ersten Oszillators 60 ausgeglichen wird. Auf Basis der Spannung U wird in der bereits beschriebenen Weise ein Ansteuersignal für die Stelleinheit 43 erzeugt.

Gemäß Fig. 2 sind die Meßeinheit 46 und das Kommunikationselement 12, 22 als eigenständige Schaltungsteile ausgeführt. Der dadurch erforderliche Schalter 47, der die Spule 13, 23 zwischen der Meßeinheit 46 und dem Kommunikationselement 12, 22 umschaltet, muß dabei für große Spannungen und Leistungen ausgelegt sein. Durch die Spannungsüberhöhung in Resonanz können an der Spule 13, 23 sehr hohe HF-Spannungen, mitunter sogar im Bereich einiger 100 V auftreten. Die erforderliche großsignalfeste Signalumschaltung ist je nach Sendeleistung ggf. nur mit einer aufwendigen und teuren Schaltung zu realisieren. In einer Abwandlung der Erfindung ist daher vorgesehen, daß die Endstufe des Kommunikationselements, die vorzugsweise als eine Transistorschaltung ausgebildet ist, durch eine geeignete Umschaltung von Arbeitspunkt, Verstärkung und der Rückkopplung des Ausgangssignales auch als den ersten Oszillator 60 bzw. den zweiten Oszillator 62 einzusetzen. Eine derartige Endstufe neigt bei einer entsprechenden Rückkopplung ohnehin zum Schwingen.

Die Meßeinheit 46 weist eine hohe Ansprechempfindlichkeit auf, da selbst kleinste Phasenänderungen noch erkannt werden können. Bei entsprechender Dimensionierung der Meßeinheit 46 und der Spule 13, 23 können andere Geräte 10, 20, 30 auch auf eine große Entfernung von bis zu einigen Metern detektiert werden. Dadurch ist es beispielsweise möglich, die Meßeinheit 46 zur Diebstahlsicherung von Verkaufsartikeln einzusetzen. In diesem Fall ist vorgesehen, die vom Schwellwertschalter 67 erzeugte Schaltspannung Us zum Auslösen eines Alarmsignales zu verwenden. Die Verkaufsartikel können beispielsweise mit RF-Etiketten versehen sein, die einen Schwingkreis ohne einen Chip aufweisen und typischerweise für einen Frequenzbereich von 8,2 MHz vorgesehen sind. Ebenso können auch akustomagnetische Etiketten eingesetzt werden, wobei der typische Frequenzbereich dann unterhalb von 60 kHz liegt.

Unter Beibehaltung des Grundgedankens, ein Kommunikationselement, das automatisch eine Datenverbindung zu einem korrespondierenden gleichartigen Kommunikationselement aufbaut, nur einzuschalten, wenn zuvor die Anwesenheit eines solchen korrespondierenden Kommunikationselementes bereits festgestellt wurde, gestattet das vorbeschriebene Konzept eine Reihe von Ausgestaltungen. So kann bei völlig gleicher Funktionalität der Aufbau der intelligenten Geräte 10, 20, 30 von dem Beschriebenen abweichen. Vor allem können die genannten Bauelemente durch entsprechend wirkende andere Baugruppen oder Schaltungen ersetzt werden. Auch ist die für die Beschreibung gewählte Aufteilung der intelligenten Geräte und Kommunikätionselemente, Schallvorrichtung, Meßeinrichtung und Datenverarbeitungskomponente willkürlich und kann ohne Einfluß auf die Funktionalität anders gefaßt werden. Insbesondere können die Funktionalitäten von Stelleinheit 43, Zeitsteuerung 45 und Meßeinheit 46 ganz oder teilweise in Softwareform in der zentralen Prozessoreinheit des Gerätes 10, 20, 30 realisiert sein. In gewissem Rahmen ist auch eine vereinfachte Ausführung der vorbeschriebenen Erfindung denkbar. Beispielsweise kann im Suchmodus das Ändern der Resonanzfrequenz im Übertragungsschwingkreis 50 und damit die Notwendigkeit zur Bereitstellung der Kapazität 51 entfallen.

## Patentansprüche

1. Kommunikationsvorrichtung zur Einrichtung einer Datenverbindung zwischen intelligenten Geräten mit
einer Spule (13, 23, 33), die Teil eines Übertragungsschwingkreises (50) ist, zur Durchführung eines berührungslosen Datenaustausches,
einem Kommunikationselement (12, 22), das mit der Spule (13, 23, 33) und der Datenverarbeitungskomponente (11, 21) eines intelligenten Gerätes (10, 20, 30) verbunden ist und das über die Spule (13, 23, 33) Suchsignale aussendet, um von einem anderen intelligenten Gerät (10, 20, 30) eine Antwort zu erhalten,
**gekennzeichnet durch**
eine Meßeinrichtung (14, 24) zur Überwachung einer Eigenschaft des Übertragungsschwingkreises (50), welche bei Feststellen einer Änderung der überwachten Eigenschaft ein Steuersignal ausgibt,
und eine Schaltvorrichtung (15, 25), die mit der Meßeinrichtung (14, 24) und dem Kommunikationselement (12, 22) verbunden ist und die das Kommunikationselement (12, 22) einschaltet, wenn sie von der Meßeinrichtung (14, 24) ein Steuersignal erhalten hat.

2. Kommunikationsvorrichtung nach Anspruch 1, **dadurch gekennzeichnet, daß** in den Übertragungsschwingkreis (50) über einen Schalter (47) eine Baugruppe (52) schaltbar ist, welche eine Erhöhung der Bandbreite des Schwingkreises (50) bewirkt.

3. Kommunikationsvorrichtung nach Anspruch 2, **dadurch gekennzeichnet, daß** die Baugruppe (52) ein Widerstandselement ist.

4. Kommunikationsvorrichtung nach Anspruch 1, **dadurch gekennzeichnet, daß** in den Übertragungsschwingkreis (50) über einen Schalter (47) eine Baugruppe (51) schaltbar ist, welche eine Änderung der Resonanzfrequenz des Übertragungsschwingkreises (50) bewirkt.

5. Kommunikationsvorrichtung nach Anspruch 4, **dadurch gekennzeichnet, daß** die Baugruppe (51) eine Senkung der Resonanzfrequenz bewirkt.

6. Kommunikationsvorrichtung nach Anspruch 4, **dadurch gekennzeichnet, daß** die Baugruppe (51) eine Kapazität beinhaltet.

7. Kommunikationsvorrichtung nach Anspruch 1, **dadurch gekennzeichnet, daß** die Meßfrequenz der Meßeinrichtung (14) über einen vorbestimmten Frequenzbereich wobbelbar ist.

8. Kommunikationsvorrichtung nach Anspruch 1, **dadurch gekennzeichnet, daß** die Schaltvorrichtung (15, 25) eine Zeitsteuerung (45) aufweist, mittels derer die Meßeinrichtung (14, 24) zyklisch ein- und ausschaltbar ist.

9. Kommunikationsvorrichtung nach Anspruch 8, **dadurch gekennzeichnet, daß** die Zeitsteuerung (45) den Einschaltzustand der Meßeinrichtung (14, 24) kürzer hält als den Ausschaltzustand.

10. Kommunikationsvorrichtung nach Anspruch 8, **dadurch gekennzeichnet, daß** die Meßeinrichtung (14, 24) einen während einer zyklischen Einschaltphase gewonnen Meßwert speichert.

11. Kommunikationsvorrichtung nach Anspruch 8, **dadurch gekennzeichnet, daß** die Meßeinrichtung (14, 24) ein Steuersignal an die Schaltvorrichtung (15, 25) abgibt, wenn ein Meßwert vom Mittelwert der mit den vorhergehenden Einschaltphasen gespeicherten Meßwerte abweicht.

12. Kommunikationsvorrichtung nach Anspruch 8, **dadurch gekennzeichnet, daß** bei Einschalten des intelligenten Gerätes (10, 20, 30) zunächst das Kommunikationselement (12, 22) eingeschaltet und die Meßeinrichtung (14, 24) ausgeschaltet ist.

13. Kommunikationsvorrichtung nach Anspruch 1, **dadurch gekennzeichnet, daß** die Meßeinrichtung (14, 24) eine mit der Spule (13, 23, 33) wenigstens zeitweise gekoppelte erste Oszillatoreinrichtung (60) zur Erzeugung eines ersten Schwingungssignales und eine zweite Oszillatoreinrichtung (62) zur Erzeugung eines zweiten Schwingungssignales aufweist.

14. Kommunikationsvorrichtung nach Anspruch 13, **dadurch gekennzeichnet, daß** die Meßeinrichtung (14,-24) Schaltungskomponenten (64, 65, 66, 67) zur Erzeugung des Steuersignales für die Schaltvorrichtung (15, 25) auf Basis einer Phasenbeziehung zwischen dem ersten und zweiten Schwingungssignal oder daraus abgeleiteten Signalen aufweist.

15. Verfahren zum Einschalten eines Kommunikationselementes, das unter Verwendung einer Spule (13, 23, 33), die Teil eines Übertragungsschwingkreises (50) ist, zum automatischen Aufbau einer Datenverbindung zu einem intelligenten Gerät (10, 20, 30) eingerichtet ist, welches ebenfalls über ein Kommunikationselement (12, 22) und eine Spule (13, 23, 33) verfügt, mit folgendem Schritt:
Aussenden eines Suchsignals durch die Spule (13, 23, 33) des Kommunikationselementes, **gekennzeichnet durch** die weiteren Schritte:
Überwachen einer Kenngröße des Übertragungsschwingkreises (50) mittels einer Meßeinrichtung (14, 24),
Erzeugen eines Steuersignales bei Auftreten einer Änderung der überwachten Kenngröße,
Einschalten des Kommunikationselementes (12, 22) **durch** eine Schaltvorrichtung (15, 25) aufgrund des Steuersignales.

16. Verfahren nach Anspruch 15, **dadurch gekennzeichnet, daß** die Meßfrequenz der Meßeinheit (46) der Meßeinrichtung (14, 24) während der Überwachung der Kenngröße über einen vorgegeben Frequenzbereich gewobbelt wird.

## Claims

1. A communication apparatus for setting up a data connection between intelligent devices, having
a coil (13, 23, 33) which is part of a transmission oscillator circuit (50) for carrying out a contactless data exchange,
a communication element (12, 22) which is connected to the coil (13, 23, 33) and the data processing component (11, 21) of an intelligent device (10, 20, 30) and which emits search signals via the coil (13, 23, 33) to receive a response from another intelligent device (10, 20, 30),
**characterized by**
a measuring device (14, 24) for monitoring a property of the transmission oscillator circuit (50) which outputs a control signal when ascertaining a change of the monitored property,
and a switching apparatus (15, 25) which is connected to the measuring device (14, 24) and the communication element (12, 22) and which switches on the communication element (12, 22) after receiving a control signal from the measuring device (14, 24).

2. The communication apparatus according to claim 1, **characterized in that** an assembly (52) is switchable to the transmission oscillator circuit (50) via a switch (47), said assembly causing an increase in the bandwidth of the oscillating circuit (50).

3. The communication apparatus according to claim 2, **characterized in that** the assembly (52) is a resistive element.

4. The communication apparatus according to claim 1, **characterized in that** an assembly (51) is switchable to the transmission oscillator circuit (50) via a switch (47), said assembly causing a change in the resonant frequency of the transmission oscillator circuit (50).

5. The communication apparatus according to claim 4, **characterized in that** the assembly (51) causes a decrease in the resonant frequency.

6. The communication apparatus according to claim 4, **characterized in that** the assembly (51) comprises a capacitor.

7. The communication apparatus according to claim 1, **characterized in that** the measuring frequency of the measuring device (14) is sweepable over a predetermined frequency domain.

8. The communication apparatus according to claim 1, **characterized in that** the switching apparatus (15, 25) has a time controller (45) for cyclically switching the measuring device (14, 24) on and off.

9. The communication apparatus according to claim 8, **characterized in that** the time controller (45) keeps the on state of the measuring device (14, 24) shorter than the off state.

10. The communication apparatus according to claim 8, **characterized in that** the measuring device (14, 24) stores a measuring value obtained during a cyclical on phase.

11. The communication apparatus according to claim 8, **characterized in that** the measuring device (14, 24) emits a control signal to the switching apparatus (15, 25) when a measuring value deviates from the average of the measuring values stored with the previous on phases.

12. The communication apparatus according to claim 8, **characterized in that** when the intelligent device (10, 20, 30) is switched on the communication element (12, 22) is initially on and the measuring device (14, 24) off.

13. The communication apparatus according to claim 1, **characterized in that** the measuring device (14, 24) has a first oscillator device (60) coupled at least temporarily with the coil (13, 23, 33), for producing a first oscillation signal, and a second oscillator device (62) for producing a second oscillation signal.

14. The communication apparatus according to claim 13, **characterized in that** the measuring device (14, 24) has circuit components (64, 65, 66, 67) for producing the control signal for the switching apparatus (15, 25) on the basis of a phase relation between the first and second oscillation signals or signals derived therefrom.

15. A method for switching on a communication element designed to use a coil (13, 23, 33), which is part of a transmission oscillator circuit (50), for automatically setting up a data connection with an intelligent device (10, 20, 30) likewise having a communication element (12, 22) and a coil (13, 23, 33), having the following step:
emitting a search signal through the coil (13, 23, 33) of the communication element,
**characterized by** the further steps:
monitoring a parameter of the transmission oscillator circuit (50) by means of a measuring device (14, 24),
producing a control signal upon the occurrence of a change in the monitored parameter,
switching on the communication element (12, 22) by a switching apparatus (15, 25) due to the control signal.

16. The method according to claim 15, **characterized in that** the measuring frequency of the measuring unit (46) of the measuring device (14, 24) is swept over a given frequency domain during the monitoring of the parameter.

## Revendications

1. Dispositif de communication destiné à l'établissement d'une connexion de données entre des appareils intelligents avec
une bobine (13, 23, 33), qui est une partie d'un circuit oscillant de transmission (50), destinée à la réalisation d'un échange de données sans contact,
un élément de communication (12, 22), qui est connecté avec la bobine (13, 23, 33) et le composant de traitement des donnés (11, 21) d'un appareil intelligent (10, 20, 30), et qui émet des signaux de recherche par l'intermédiaire de la bobine (13, 23, 33), afin de recevoir une réponse de la part d'un autre appareil intelligent (10, 20, 30),
**caractérisé par**
un équipement de mesure (14, 24) destiné à la surveillance d'une propriété du circuit oscillant de transmission (50), lequel équipement de mesure émet un signal de commande en cas de constatation d'une modification de la propriété surveillée,
et un dispositif de commutation (15, 25) qui est connecté avec l'équipement de mesure (14, 24) et l'élément de communication (12, 22) et qui active l'élément de communication (12, 22) quand il a reçu un signal de commande de la part de l'équipement de mesure (14, 24).

2. Dispositif de communication selon la revendication 1, **caractérisé en ce qu'**un module (52) engendrant une augmentation de la largeur de bande du circuit oscillant (50) est, par l'intermédiaire d'un commutateur (47), commutable dans le circuit oscillant de transmission (50).

3. Dispositif de communication selon la revendication 2, **caractérisé en ce que** le module (52) est un élément de résistance.

4. Dispositif de communication selon la revendication 1, **caractérisé en ce qu'**un module (51) engendrant une modification de la fréquence de résonance du circuit oscillant de transmission (50) est, par l'intermédiaire d'un commutateur (47), commutable dans le circuit oscillant de transmission (50).

5. Dispositif de communication selon la revendication 4, **caractérisé en ce que** le module (51) engendre une diminution de la fréquence de résonance.

6. Dispositif de communication selon la revendication 4, **caractérisé en ce que** le module (51) comprend une capacité.

7. Dispositif de communication selon la revendication 1, **caractérisé en ce que** la fréquence de mesure de l'équipement de mesure (14) est vobulable sur une gamme de fréquences prédéterminée.

8. Dispositif de communication selon la revendication 1, **caractérisé en ce que** le dispositif de commutation (15, 25) comporte une commande temporisée (45) au moyen de laquelle l'équipement de mesure (14, 24) peut être cycliquement activé et désactivé.

9. Dispositif de communication selon la revendication 8, **caractérisé en ce que** la commande temporisée (45) maintient l'état activé de l'équipement de mesure (14, 24) sur une période de temps plus courte que l'état désactivé.

10. Dispositif de communication selon la revendication 8, **caractérisé en ce que** l'équipement de mesure (14, 24) mémorise une valeur mesurée obtenue durant une phase cyclique d'activation.

11. Dispositif de communication selon la revendication 8, **caractérisé en ce que** l'équipement de mesure (14, 24) envoie un signal de commande au dispositif de commutation (15, 25) quand une valeur mesurée diverge de la valeur moyenne des valeurs mesurées mémorisées lors des phases d'activation précédentes.

12. Dispositif de communication selon la revendication 8, **caractérisé en ce que**, lors de l'activation de l'appareil intelligent (10, 20, 30), l'élément de communication (12, 22) est tout d'abord activé et l'équipement de mesure (14, 24) est tout d'abord désactivé.

13. Dispositif de communication selon la revendication 1, **caractérisé en ce que** l'équipement de mesure (14, 24) comporte un premier équipement d'oscillateur (60) couplé au moins temporairement avec la bobine (13, 23, 33) et destiné à générer un premier signal d'oscillation, et un deuxième équipement d'oscillateur (62) destiné à générer un deuxième signal d'oscillation.

14. Dispositif de communication selon la revendication 13, **caractérisé en ce que** l'équipement de mesure (14, 24) comporte des composants de circuit (64, 65, 66, 67) destinés à générer le signal de commande pour le dispositif de commutation (15, 25) sur la base d'une relation de phase entre le premier et le deuxième signal d'oscillation ou des signaux en dérivant.

15. Procédé d'activation d'un élément de communication qui, en utilisant une bobine (13, 23, 33) qui est une partie d'un circuit oscillant de transmission (50), est équipé pour établir automatiquement une connexion de données avec un appareil intelligent (10, 20, 30) disposant lui aussi d'un élément de communication (12, 22) et d'une bobine (13, 23, 33), comprenant l'étape suivante :
émission d'un signal de recherche par la bobine (13, 23, 33) de l'élément de communication,
**caractérisé par** les étapes ultérieures :
surveillance d'un paramètre du circuit oscillant de transmission (50) au moyen d'un équipement de mesure (14, 24),
génération d'un signal de commande lorsque survient une modification du paramètre surveillé,
activation de l'élément de communication (12, 22) par un dispositif de commutation (15, 25) en raison du signal de commande.

16. Procédé selon la revendication 15, **caractérisé en ce que** la fréquence de mesure de l'unité de mesure (46) de l'équipement de mesure (14, 24) est vobulée durant la surveillance du paramètre sur une gamme de fréquences prédéterminée.
